# EUROPEAN PATENT SPECIFICATION

(11) **EP 1 939 254 B1**
(45) Date of publication and mention of the grant of the patent: **12.09.2018**
(21) Application number: 06822173.8
(22) Date of filing: 18.10.2006
(51) Int. Cl.: C08L 77/00, B29C 65/16, C08K 7/14, C08L 101/00, B29K 77/00, B29K 105/12, B29K 509/08, B29L 31/30, F02M 35/10, C08L 77/02

(54) **MATERIAL FOR LASER FUSION BONDING**
MATERIAL ZUM LASERVERSCHMELZEN
MATÉRIAU POUR SOUDURE PAR FUSION AU LASER

(30) Priority: 18.10.2005 JP 2005302570
(43) Date of publication of application: 02.07.2008
(73) Proprietor: Ube Industries, Ltd., Ube-shi, Yamaguchi 755-8633 (JP)
(72) Inventor: KATAYAMA, Tsutomu, Ube Industries, Ltd., Ube-shi Yamaguchi 755-8633 (JP); MIYAMOTO, Akio 602, Riverside-Ueda, Nagoya-shi Aichi 468-0053 (JP); FUKUI, Yasuharu, Ube Industries, Ltd., Ube-shi Yamaguchi 755-8633 (JP); HARADA, Hideki, Ube Industries, Ltd., Ube-shi Yamaguchi 755-8633 (JP)
(74) Representative: Hoeger, Stellrecht & Partner Patentanwälte mbB
(86) International application number: PCT/JP2006/321196
(87) International publication number: WO 2007/046536

(56) References cited:
- EP-A1- 1 306 404
- EP-A2- 0 376 616
- EP-A2- 0 400 935
- WO-A1-2005/021244
- JP-A- 02 173 047
- JP-A- 07 018 186
- JP-A- 08 259 808
- JP-A- 2002 348 371
- JP-A- 2004 250 621
- JP-A- 2005 336 229

## Description

### TECHNICAL FIELD

The present invention relates to a material for laser welding, which is used for welding together resin members by irradiating laser light. More specifically, the present invention relates to a material for laser welding, which is excellent in the mechanical property, low warpage and laser weldability.

### BACKGROUND ART

In recent years, from the standpoint of reducing the weight, and cost, parts in various fields, such as automobile parts and electric parts, are often resinified into a resin shaped article. In view of high productivity, the resin shaped article is produced in many cases by a method of shape-forming a plurality of resin members into which the resin shaped article is previously divided, and joining together the resin members.

In joining the resin members, for example, joining by an adhesive agent or mechanical joining with a bolt is performed. However, the adhesive strength in joining with an adhesive, and the cost, labor of fastening, and increase in weight in the mechanical joining with a bolt become problems. On the other hand, external heat welding, such as laser welding and hot plate welding, and friction heat welding, such as vibration welding and ultrasonic welding, joining can be performed in a short time and by not using an adhesive agent or a metal part. Therefore problems such as an increase in the cost or weight or environmental pollution do not occur. For this reason, assembling by such a method is increasing.

Particularly, laser welding which is one external heat welding methods is, as disclosed, for example, in Japanese Unexamined Patent Publication (Kokai) No. 60-214931, a method where a transmissive resin material transmissive to laser light and a non-transmissive resin material not transmissive to laser light are laid one on another and laser light is irradiated from the transmissive resin material side to heat-melt the abutting surfaces of the transmissive resin material and non-transmissive resin material to each other, thereby integrally joining both materials. This is a welding method which is being used in a wide range of fields by utilizing its advantages, such as feasibility of three-dimensional joining, non-contact processing, and no generation of burr.

In this laser welding method, if the energy loss of laser light transmitting through the transmissive resin material is large, heat-melting at the joining interface between the non-transmissive resin material and the transmissive resin material becomes insufficient, and satisfactory weld strength cannot be achieved. Therefore, the resin member on the laser transmitting side is required to transmit the laser light to a certain extent.

Conventionally, in order to enhance the mechanical strength or impact resistance of a resin member, a fibrous reinforcement such as glass fiber is mixed with the resin. However, the laser transmittance of a polyamide resin, for example, is greatly reduced by blending a general glass fiber having a fiber diameter of around 10 µm and there arises a problem that a sufficiently large amount of laser energy cannot arrive at and be absorbed by the abutting surface of the non-transmissive resin material.

In order to solve this problem, a technique of using laser light at a wavelength of 1.5 to 2.5 µm (see, Japanese Patent No. 3,630,293), or making the crystallinity of the joining part lower than that of other parts (see, Japanese Patent No. 3,596,456) has been proposed, but these methods are disadvantageous in that the applicable range is limited and when the amount of a glass fiber blended exceeds 30 wt%, satisfactory laser transmittance cannot be obtained.

In order to weld together abutting surfaces of a transmissive resin material and a non-transmissive resin material to each other by laser welding and obtain sufficiently high joining strength, the gap between abutting surfaces of the transmissive resin material and non-transmissive resin material needs to be as small as possible or eliminated, because when a gap is present between abutting surfaces, heat generated on the abutting surface of the non-transmissive resin material cannot transmit to the abutting surface of the transmissive resin material, and heat-melting on the abutting surface of the transmissive resin material becomes insufficient, failing to sufficiently weld together the abutting surfaces of the non-transmissive resin material and transmissive resin material to each other, and furthermore, because the gap is filled due to melt expansion resulting from melting of the non-transmissive resin material and the apparent density of the non-transmissive resin material which results in the weld strength being decreased.

The gap between resin members is the result of warpage deformation of each resin member, and the warpage deformation inevitably occurs in an injection-molded article of a glass fiber-reinforced resin, such as a polyamide, polyethylene, polyacetal and polyester.

In order to reduce the warpage deformation, addition and combination of an amorphous thermoplastic resin has been proposed. However, the combination of an amorphous thermoplastic resin in a large amount is not preferred in many cases, because the innate characteristic features of a crystalline thermoplastic resin, such as chemical resistance and thermal deformation temperature, are generally impaired.

Also, it has been proposed to blend glass fiber together with an ore powder such as kaolin, mica and talc (see, for example, Japanese Unexamined Patent Publication (Kokai) Nos. 60-32847 and 6-299068). However, when blending of the ore powder as above a problem occurs in which there is a serious reduction in the laser transmittance.

Furthermore, in order to enable laser welding even when a resin member is warped, a method has been proposed for securing a weld area, where a transmissive resin member in which a projected part is provided, and a resin member on the laser light absorbing side, in which a recessed part is provided to make a difference in the height between right and left walls, both are engaged not to generate a gap and laser light is injected from the projected part side over the lower wall side to heat the recessed part, thereby welding together both members (see, for example, Japanese Unexamined Patent Publication (Kokai) No. 2002-86567).

According to this method, gapless welding becomes possible, but since heat-melting is performed while mechanically regulating and correcting the position between a pair of members to be engaged, in the case of a product requiring large correction, i.e., generating large warpage deformation, the strain resulting from the correction is large. The strain may be relieved in the portion melted by laser, but in many products, the welded part does not correspond to the site subjected to generation of strain and the strain may be disadvantageously frozen. As a result, in use of the product, for example, creep fracture, local fracture or cracking due to a heating-cooling cycle may occur.

Furthermore, since a projected part is provided in the transmission-side member, laser light must transmit through a thick projected part and this may cause a large transmission loss of the laser light and insufficient weld-bonding. Accordingly, there is a problem that in the case where the product shape is limited, the wall thickness suitable for weld-bonding cannot be maintained.

On the other hand, a technique of improving the warpage by reinforcement using a glass fiber having a flat cross-section in place of a general glass fiber having a fiber diameter of around 10 µm is disclosed (see, for example, Japanese Unexamined Patent Publication (Kokai) No. 8-259808). In this patent publication, joining of parts by vibration welding is described, but laser weldability is not referred to.

JP 08-259808 A discloses a vibration-fused hollow article made from a polyamide resin composition, which comprises 50 to 80 weight% of a polyamide resin having a relative viscosity of 2.5 to 4.0, and 20 to 50 weight% of non-circular glass fibers.

EP 0 376 616 A2 discloses a fiber-reinforced thermoplastic resin composition, which is stable in its dimension and comprises a thermoplastic resin and 1 to 65 weight%, based on the total amount of the composition, of a fibrous reinforcement having an oblate cross section.

JP 07-018186 A discloses a resin composition obtained by blending 100 parts per weight thermoplastic resin such as nylon with 5 to 150 parts per weight powder of gas fiber having a flat cross-sectional shape.

EP 1 306 404 A1 discloses natural-colored and pigmented thermoplastic molding compositions and molded parts fabricated therefrom that are laser-absorbing at least in partial spectral regions of the wavelength range from 700 to 1,200 nm.

An object of the present invention is to solve the above-described problems and provide a material for laser welding, which is excellent in the laser transmittance as well as the low warpage and enables a shaped article to be obtained with a high weld strength and uniform weld strength by laser welding.

### DISCLOSURE OF THE INVENTION

As a result of intensive studies, the present inventors have found that a polyamide resin composition having blended therein a glass fiber having a non-circular cross-section with the ratio between the long diameter and the short diameter in the cross-section at right angles to the length direction being from 1.2 to 10 is excellent in laser transmittance, as well as low warpage and when shaping parts each comprising this polyamide resin composition are laser-welded to each other, a shaped article having high weld strength and uniform weld strength can be obtained. The present invention has been accomplished based on this finding.

The present invention relates to a material for laser welding in accordance with claim 1.

The present invention also provides a laser welding method of a shaped article according to claim 5 using this material for laser welding, and a shaped according to claim 6 prepared by laser welding from the material for laser welding.

Preferred embodiments are in accordance to claims 2 to 4 and 7.

### BRIEF DESCRIPTION OF THE DRAWINGS

Figs. 1A and 1B each shows an example of the glass fiber used in Examples and Comparative Examples.
Figs. 2A and 2B are a plan view and a side view each showing an outline of the test vessel for laser welding produced in Examples of the present invention.
Fig. 3 is a schematic view of the specimen for measurement of laser weld strength, cut out from the test vessel for laser welding produced in Examples of the present invention.

### BEST MODE FOR CARRYING OUT THE INVENTION

The material for laser welding of the present invention comprises a thermoplastic resin composition containing (A) a thermoplastic resin and (B) a glass fiber having a non-circular cross-section with the ratio between the long diameter and the short diameter in the cross-section at right angles to the length direction being from 1.2 to 10.

The thermoplastic resin (A) for use in the present invention may be any resin as long as it has light transmittance and thermoplasticity. Specific examples of the resin which can used include a polyamide (PA) such as nylon 6 and nylon 66, a polycarbonate (PC), an acrylonitrile-butadiene-styrene copolymer (ABS), a polyethylene (PE), a polypropylene (PP), a styrene-acrylonitrile copolymer (AS), a polyethylene terephthalate (PET), an acrylic resin such as polymethyl methacrylate (PMMA), a polystyrene (PS), a polybutylene terephthalate (PBT) and a polyphenylene sulfide (PPS). Above all, a polyamide resin excellent in the chemical resistance, toughness and assured of high reinforcement effect by a glass fiber is preferred.

The polyamide resin includes a resin comprising a diamine and a dibasic acid, a resin comprising a lactam or an aminocarboxylic acid, and a resin comprising a copolymer of two or more members thereof.

Examples of the diamine include an aliphatic diamine such as tetramethylenediamine, hexamethylenediamine, octamethylenediamine, nonamethylenediamine, undecamethylenediamine and dodecamethylenediamine, and a diamine having an aromatic-cyclic structure, such as methaxylylenediamine.

Examples of the dicarboxylic acid include an aliphatic diamine such as adipic acid, heptanedicarboxylic acid, octanedicarboxylic acid, nonanedicarboxylic acid, undecanedicarboxylic acid and dodecanedicarboxylic acid, and a dicarboxylic acid having an aromatic-cyclic structure, such as terephthalic acid and isophthalic acid.

The lactam is lactams having a carbon number of 6 to 12, and examples thereof include ε-caprolactam, enantholactam, undecanelactam, dodecanelactam, α-pyrrolidone and α-piperidone. The aminocarboxylic acid is an aminocarboxylic acid having a carbon number of 6 to 12, and examples thereof include 6-aminocaproic acid, 7-aminoheptanoic acid, 9-aminononanoic acid, 11-aminoundecanoic acid and 12-aminododecanoic acid.

Specific examples of the polyamide resin include polyamide 6, polyamide 66, polyamide 11, polyamide 12, polyamide 610, polyamide 612 and polyamide 6/66.

In view of low warpage and mechanical characteristics, the glass fiber (B) having a non-circular cross-section is a glass fiber where the ratio between the long diameter and the short diameter in the cross-section at right angles to the length direction is from 1.2 to 10, preferably from 1.5 to 6, more preferably from 1.7 to 4.5. The long diameter as used herein indicates the distance when a straight line between two points arbitrary on the cross-sectional figure at a maximum distance, and the short diameter indicates a maximum distance between two points intersecting the cross-sectional figure out of straight lines orthogonal to the long diameter above.

The glass fiber (B) having a non-circular cross-section is not particularly limited in the cross-sectional shape as long as it has the predetermined ratio between the long diameter and the short diameter, but a glass fiber having a cross-section in the shape of eyebrow, oval, semicircle, arc, rectangle, parallelogram, or similar geometry is usually used. In practice, from the standpoint of flowability, mechanical characteristics and low warpage, a glass fiber having an eyebrow-shaped, oval or rectangular cross-section is preferred. The fiber length is usually from 1 to 15 mm, preferably from 1.5 to 12 mm, more preferably from 2 to 6 mm. For the purpose of enhancing the dispersibility and adhesion in the polyamide resin, the glass fiber is preferably surface-treated with a silane coupling agent, a titanium coupling agent or other polymer or low-molecular surface-treating agents.

The blending percentage of the glass fiber (B) having a non-circular cross-section is preferably from 10 to 70 wt%, more preferably from 15 to 60 wt%, based on the entire thermoplastic resin composition. If the blending percentage is too small, the effect of reducing warpage is not brought out; however, if it is excessively large, laser transmittance is worsened.

The thermoplastic resin composition of the present invention may contain one or two or more kinds of fillers other than the glass fiber (B) having a non-circular cross-section. The filler is preferably a filler having good laser transmittance, and examples thereof include glass flakes, glass beads, light-transmissive alumina, and silica. The blending ratio between the glass fiber (B) having a non-circular cross-section and the filler above is preferably in the range of 100:0 to 10:90, more preferably in the range of 95:5 to 20:80.

In the thermoplastic resin composition of the present invention, other components, for example, a function-imparting agent such as plasticizer, anti-impact agent, heat-resisting agent, foaming agent, weather-resisting agent, crystal nucleating agent, crystallization promoter, release agent, lubricant, antistatic agent, flame retardant, flame retardancy aid, pigment and dye, may appropriately blended within the range of not impairing the effects of the present invention.

The method for producing a shaped article from the material for laser welding of the present invention is not particularly limited, and the material can be produced into various shapes by using a commonly employed thermoplastic resin molding machine such as extrusion molding machine, blow molding machine, compression molding machine and injection molding machine.

For example, in the case of producing a hollow shaped article such as intake manifold, two or more divided bodies constituting the hollow shaped article are formed by injection molding, and these are then joined together by laser welding, whereby the hollow shaped article can be produced.

In this case, one part is formed of a material for laser welding and is laser-transmissive, the other part is formed of the material of the present invention exhibiting laser absorptivity, and these two parts are welded together by irradiating laser light from the laser-transmissive part side.

The material exhibiting laser absorptivity is obtained by blending an additive having absorptivity of laser light to the material for laser welding of the present invention.

Instead of forming the other part from a material exhibiting laser absorptivity, a laser-absorbing coating material may be applied to the surface. Furthermore, the laser welding may also be performed in the state of a laser-absorbing film being interposed between two parts.

In the case of use for a laser-transmissive part, the laser transmittance of the material for laser welding of the present invention is preferably 20% or more.

The laser transmittance as referred to in the present invention is a numerical value obtained by measuring the resin composition shape-formed into ASTM No. 1 dumbbell.

When two parts are colored with a colorant of the same color, resins of the same color can be joined together, and the joined resin member can have good-appearance.

The colorant non-absorptive of laser light includes an anthraquinone-based dye and an organic dye such as perylene-based, perinone-based, heterocycle-based, disazo-based and monoazo-based dyes.

The colorant having absorptivity of laser light includes an inorganic colorant such as carbon black and composite oxide-based pigment, and an organic colorant such as phthalocyanine-based pigment and polymethine-based pigment.

The laser light used for laser welding includes, for example, laser light of a glass:neodymium³⁺ laser, a YAG:neodymium³⁺ laser, a ruby laser, a helium-neon laser, krypton laser, an argon laser, an H₂ laser, an N₂ laser and a semiconductor laser. The preferred laser is a semiconductor laser.

The wavelength of laser light varies depending on the resin material joined and cannot be indiscriminately specified, but is preferably 400 nm or more. If the wavelength is less than 400 nm, this causes significant deterioration of the resin.

The output of laser light can be adjusted by the scan rate and the absorbing ability of the first resin member. If the output of laser light is low, the joining surfaces each composed of a resin material cannot be melted together. However, if the output is high, a problems occurs in that the resin material evaporates or deteriorates thereby decreasing the strength.

### EXAMPLES

The present invention is described in greater detail below by referring to Examples and Comparative Examples, but the present invention is hot limited to these Examples.

The methods for measuring the physical properties of the resins and shaped articles used in Examples and Comparative Examples are described below.

### (1) Tensile Strength and Tensile Failure Strain

The test was performed using a specimen of 4 mm in thickness at a tensile speed of 5 mm/min according to ISO527-1,2 at ordinary temperature (n=5) (ordinary temperature is room temperature).

### (2) Tensile Modulus

The test was performed using a specimen of 4 mm in thickness at a tensile speed of 1 mm/min according to IS0527-1,2 at ordinary temperature (n=5).

### (3) Charpy Impact Strength

An edgewise impact test was performed using an A-notched specimen of 4 mm in thickness according to IS0179-1 at ordinary temperature (n=10).

### (4) Warpage Amount

A D1 die (60x60x1 t) of ISO294-3 was shape-formed under the following shape-forming conditions, immediately gate-cut and left standing in a moistureproof container for 48 hours, and by placing a weight at a prescribed corner on a board, the maximum gap from the board was defined as the warpage amount (n=5).

Molten resin temperature: 290°C, die temperature: 80°C, average injection rate in die: 250 mm/sec, pressure-holding: 60 MPa × 15 sec, and cooling time: 10 sec.

### (5) Laser Transmittance

A semiconductor laser of 940 nm was irradiated on a 10 mm-width straight part of an ISO3167 specimen injection-molded according to ISO294-1 and ISO1874, and the transmitted laser light was measured by a power energy analyzer (Field Master (registered trademark) GS LM-45, manufactured by Coherent Japan, Inc.).

### (6) Laser Weld Strength

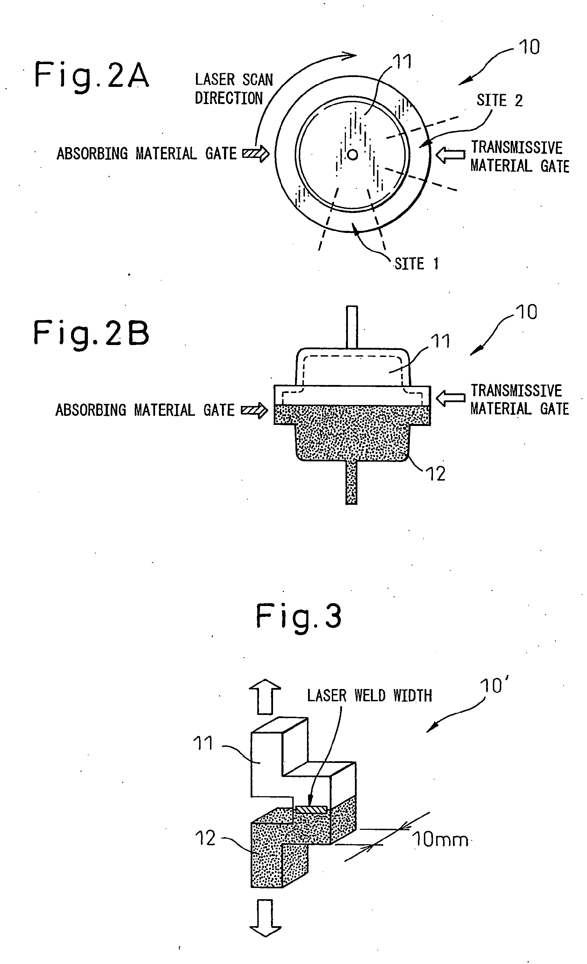

A specimen 10' shown in Fig. 3, which was obtained by tightly contacting a transmissive material 11 and an absorbing material 12 shown in Figs. 2A and 2B, laser-welding these materials to produce a test vessel 10, and cutting out the sites 1 and 2 each into a width of 10 mm, was measured by using Tensilon (UTM-I-2500) manufactured by ORIENTEC Co., Ltd. at a speed of 5 mm/min.

Site 1: A site having almost no gap on the joined surface.

Site 2: A site having a slight gap due to warpage on the joined surface.

### Polyamide Resin

PA6: polyamide 6 (1015B, produced by Ube Industries, Ltd.)

### Glass Fiber

### GF1:

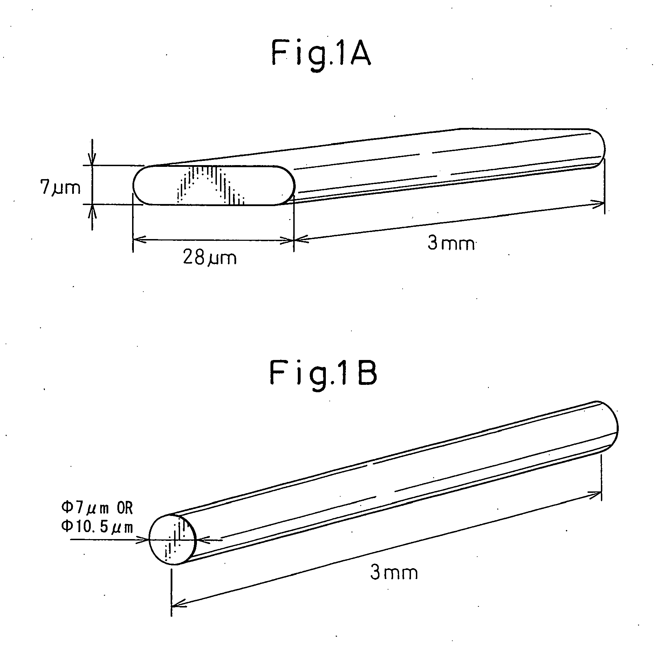

A glass fiber having a rectangular cross-sectional shape (CSG3PA-820, produced by Nitto Boseki Co., Ltd.), long diameter/short diameter ratio: 4, fiber diameter: 7 µm × 28 µm, length: 3 mm (Fig. 1A).

### GF2:

A glass fiber having a circular cross-sectional shape (CS3DE-451, produced by Nitto Boseki Co., Ltd.), long diameter/short diameter ratio: 1, fiber diameter: 7 µm, length: 3 mm (Fig. 1B).

### GF3:

A glass fiber having a circular cross-sectional shape (ECS03T249H, produced by Nippon Electric Glass Co., Ltd.), long diameter/short diameter ratio: 1, fiber diameter: 10.5 µm, length: 3 mm (Fig. 1B).

### Other Additives

### Wollastonite:

DENA KUP 325, produced by Takehara Kagaku Kogyo Co., Ltd.

### Examples 1 to 4:

A polyamide resin and a glass fiber shown in Table 1 were melt-kneaded by TEX44HCT twin-screw kneader to prepare a pellet of the objective polyamide resin composition.

The obtained pellet was injection-molded at a cylinder temperature of 290°C and a die temperature of 80°C to produce various specimens. Figs. 2A and 2B show a plan view and a side view of the test vessel 10. Sites 1 and 2 of the test vessel 10 were cut out to prepare a 10 mm-width specimen 10' shown in Fig. 3. Accordingly, Fig. 3 shows the cross-sectional shape in the vicinity of the welded part of the test vessel 10. The laser weld strength was measured using this Fig. 3.

In addition, various physical properties, laser transmittance and warpage amount were evaluated using various specimens of polyamide resin compositions prepared. The results obtained are shown in Table 1.

The laser weld strength was also measured by the following method, and the results are shown in Table 1.

A resin composition obtained by kneading a polyamide resin and a glass fiber at the ratio shown in Table 1 was injection-molded into a half-divided body 11 shown in Figs. 2A and 2B as a transmission-side member at a cylinder temperature of 290°C and a die temperature of 80°C, the other half-divided body 12 as an absorption-side member was produced under the same conditions as in the shape-forming above from a resin composition obtained by further blending 0.3 wt% of carbon black to the resin composition at the ratio shown in Table 1, and the transmission-side member and the absorption-side member in the state of being laid one on another were set in a semiconductor laser device. Laser light was irradiated from the side of transmission-side member to weld together both members.

At this time, the laser light used for laser welding had a wavelength of 940 nm and was irradiated under the irradiation conditions of a laser light intensity of 20 W, a scan speed of 10 mm/sec, and a focus diameter of 2 mm. Predetermined portions were cut out from the welded member obtained, and the tensile strength of the weld part was measured.

### Comparative Examples 1 to 5:

A polyamide resin and a glass fiber shown in Table 1 were melt-kneaded by TEX44HCT twin-screw kneader to prepare a pellet of the objective polyamide resin composition.

The obtained pellet was injection-molded at a cylinder temperature of 290°C and a die temperature of 80°C to produce various specimens, and various physical properties, laser transmittance and warpage amount were measured. The laser weld strength was evaluated using the specimen of Fig. 3 described in Examples. The results obtained are shown in Table 1.

The laser weld strength was also measured in the same manner as in Example 1, and the results are shown in Table 1.

**Table 1**

| | | | Example | | | | Comparative Example | | | | |
|---|---|---|---|---|---|---|---|---|---|---|---|
| | | | 1 | 2 | 3 | 4 | 1 | 2 | 3 | 4 | 5 |
| Polyamide resin | PA6 | wt% | 85 | 70 | 55 | 40 | 70 | 70 | 55 | 40 | 58 |
| Glass fiber | GF1 | wt% | 15 | 30 | 45 | 60 | | | | | |
| | GF2 | wt% | | | | | 30 | | | | 15 |
| | GF3 | wt% | | | | | | 30 | 45 | 60 | |
| Wollastonite | | wt% | | | | | | | | | 27 |
| Tensile strength | | MPa | 120 | 172 | 226 | 271 | 187 | 181 | 229 | 257 | 141 |
| Tensile failure strain | | % | 2.6 | 2.9 | 2.7 | 2.4 | 3.8 | 3.5 | 3.2 | 2.8 | 4.1 |
| Tensile modulus | | GPa | 6.11 | 9.40 | 13.97 | 20.51 | 9.42 | 9.54 | 14.39 | 20.34 | 9.14 |
| Charpy impact strength | | KJ/m² | 8.6 | 15.2 | 21.1 | 22.2 | 11.8 | 13.8 | 19.9 | 18.7 | 6.7 |
| Laser transmittance | | % | 43.6 | 37.9 | 29.9 | 23.0 | 24.6 | 25.1 | 19.4 | 12.3 | ≤10 |
| Warpage amount | | mm | 2.0 | 0.8 | 0.6 | 0.4 | 4.2 | 4.3 | 4.2 | 3.9 | 1.4 |
| Laser weld strength | Site 1 | N | 739 | 755 | 642 | 612 | 518 | 539 | 426 | 105 | not bonded |
| | Site 2 | N | 685 | 713 | 585 | 550 | 251 | 336 | not bonded | not bonded | not bonded |

### INDUSTRIAL APPLICABILITY

The material for laser welding of the present invention is excellent in laser transmittance, as well as low warpage, and when shaping parts each comprising the material for laser welding are laser-welded to each other, a shaped article having high weld strength and uniform weld strength can be obtained.

The material for laser welding of the present invention is useful for electrical and electronic application, automobile application, general miscellaneous goods application, construction material, and specifically, is suitably used, for example, for an electronic component case of a personal computer, liquid crystal projector, mobile equipment, or cellular phone, a module product of switches, a joining component inside of a remote controller, a module product of electric equipment parts, a module component in engine room, an intake manifold, an underhood component, a radiator component, a cockpit module component used for instrument panel, and a casing.

## Claims

1. A material for laser welding, comprising a thermoplastic resin composition containing (A) a thermoplastic polyamide resin and (B) a glass fiber having a non-circular cross-section with the ratio between the long diameter and the short diameter in the cross-section at right angles to the length direction being from 1.2 to 10, wherein the thermoplastic resin composition further contains an additive with laser absorptivity.

2. The material for laser welding as claimed in claim 1, wherein based on the entire thermoplastic resin composition, the content of the thermoplastic polyamide resin (A) is from 90 to 30 wt% and the content of the glass fiber (B) having a non-circular cross-section with the ratio between the long diameter and the short diameter in the cross-section at right angles to the length direction being from 1.2 to 10 is from 10 to 70 wt%.

3. The material for laser welding as claimed in claim 1, wherein the ratio between the long diameter and the short diameter in the cross-section at right angles to the length direction of the glass fiber is from 1.5 to 6.

4. The material for laser welding as claimed in claim 1, wherein the laser transmittance of the thermoplastic resin composition is 20% or more.

5. A laser welding method of a shaped article, comprising laser-welding together a plurality of parts each prepared by shape-forming a material for laser welding, wherein
one part is a laser-transmissive part which is shape-formed from a material for laser welding comprising a thermoplastic resin composition containing (A) a thermoplastic polyamide resin and (B) a glass fiber having a non-circular cross-section with the ratio between the long diameter and the short diameter in the cross-section at right angles to the length direction being from 1.2 to 10, and
the other part is a laser-absorbing part which is shape-formed from said material for laser welding according to any of claims 1 to 4,
these parts are mutually abutted, and laser light is irradiated from the laser-transmissive part side to laser-weld both parts.

6. A shaped article prepared by the laser welding method according to claim 5.

7. The shaped article as claimed in claim 6, wherein the shaped article is an intake manifold or accessory of an automobile engine.

## Patentansprüche

1. Material zum Laserschweißen, umfassend eine thermoplastische Harzzusammensetzung enthaltend (A) ein thermoplastisches Polyamidharz und (B) eine Glasfaser mit einem unrunden Querschnitt und einem Verhältnis zwischen dem langen Durchmesser und dem kurzen Durchmesser im Querschnitt rechtwinklig zur Längsrichtung von 1,2 bis 10, wobei die thermoplastische Harzzusammensetzung ferner ein laserabsorbierendes Additiv enthält.

2. Material zum Laserschweißen nach Anspruch 1, wobei auf der Basis der gesamten thermoplastischen Harzzusammensetzung der Anteil des thermoplastischen Polyamidharzes (A) von 90 bis 30 Gew.% beträgt und der Anteil der Glasfaser (B) mit einem unrunden Querschnitt und einem Verhältnis zwischen dem langen Durchmesser und dem kurzen Durchmesser im Querschnitt rechtwinklig zur Längsrichtung von 1,2 bis 10, von 10 bis 70 Gew.% beträgt.

3. Material zum Laserschweißen nach Anspruch 1, wobei das Verhältnis zwischen dem langen Durchmesser und dem kurzen Durchmesser der Glasfaser im Querschnitt rechtwinklig zur Längsrichtung von 1,5 bis 6 beträgt.

4. Material zum Laserschweißen nach Anspruch 1, wobei die Lasertransmission der thermoplastischen Harzzusammensetzung 20% oder mehr beträgt.

5. Verfahren zum Laserschweißen eines Formteils, umfassend das Zusammenschweißen mittels Laser von einer Mehrzahl von Teilen, die jeweils durch Formgebung eines Materials zum Laserschweißen hergestellt sind, wobei
das eine Teil ein laserdurchlässiges Teil ist, hergestellt durch Formgebung aus einem Material zum Laserschweißen umfassend eine thermoplastische Harzzusammensetzung enthaltend (A) ein thermoplastisches Polyamidharz und (B) eine Glasfaser mit einem unrunden Querschnitt und einem Verhältnis zwischen dem langen Durchmesser und dem kurzen Durchmesser, der im Querschnitt rechtwinklig zum langen Durchmesser verläuft, von 1,2 bis 10, und
das andere Teil ein laserabsorbierendes Teil ist, hergestellt durch Formgebung aus dem Material zum Laserschweißen nach einem der Ansprüche 1 bis 4, und
wobei diese Teile aneinander angelegt werden, und Laserlicht von der Seite des laserdurchlässigen Teils eingestrahlt wird, um die Teile mittels Laser zu verschweißen.

6. Formteil, hergestellt durch das Verfahren zum Laserschweißen nach Anspruch 5.

7. Formteil nach Anspruch 6, wobei das Formteil ein Einlasskrümmer oder ein Zusatzteil eines Kraftfahrzeugmotors ist.

## Revendications

1. Matériau pour soudage au laser, comprenant une composition de résine thermoplastique contenant (A) une résine de polyamide thermoplastique et (B) des fibres de verre ayant une section transversale non circulaire, le rapport entre le diamètre long et le diamètre court dans la section transversale à angle droit par rapport à la direction de la longueur étant de 1,2 à 10, dans lequel la composition de résine thermoplastique contient en outre un additif présentant une certaine absorptivité du laser.

2. Matériau pour soudage au laser selon la revendication 1, dans lequel, par rapport à la totalité de la composition de résine thermoplastique, la teneur en la résine de polyamide thermoplastique (A) est de 90 à 30 % en poids et la teneur en les fibres de verre (B) ayant une section transversale non circulaire avec un rapport entre le diamètre long et le diamètre court dans la section transversale à angle droit par rapport à la direction de la longueur de 1,2 à 10 est de 10 à 70 % en poids.

3. Matériau pour soudage au laser selon la revendication 1, dans lequel le rapport entre le diamètre long et le diamètre court dans la section transversale à angle droit par rapport à la direction de la longueur des fibres de verre est de 1,5 à 6.

4. Matériau pour soudage au laser selon la revendication 1, dans lequel le coefficient de transmission du laser de la composition de résine thermoplastique est de 20 % ou plus.

5. Procédé de soudage au laser d'un article façonné, comprenant le soudage au laser ensemble d'une pluralité de pièces préparées chacune par façonnage d'un matériau pour soudage au laser, dans lequel
une pièce est une pièce transmettant le laser qui est façonnée à partir d'un matériau pour soudage au laser comprenant une composition de résine thermoplastique contenant (A) une résine de polyamide thermoplastique et (B) des fibres de verre ayant une section transversale non circulaire, avec un rapport entre le diamètre long et le diamètre court dans la section transversale à angle droit par rapport à la direction de la longueur de 1,2 à 10, et
l'autre pièce est une pièce absorbant le laser qui est façonnée à partir dudit matériau pour soudage au laser selon l'une quelconque des revendications 1 à 4,
ces pièces sont contiguës l'une à l'autre, et une lumière laser est irradiée depuis le côté de la pièce transmettant la lumière pour souder au laser les deux pièces.

6. Article façonné préparé par le procédé de soudage au laser selon la revendication 5.

7. Article façonné selon la revendication 6, lequel article façonné est un collecteur d'admission ou un accessoire d'un moteur d'automobile.
